# EUROPEAN PATENT SPECIFICATION

(11) **EP 1 765 637 B1**
(45) Date of publication and mention of the grant of the patent: **09.12.2009**
(21) Application number: 05761549.4
(22) Date of filing: 15.07.2005
(51) Int. Cl.: B60P 3/42, B60N 2/24, B60N 2/015

(54) **SEATING APPARATUS FOR USE ON A VEHICLE HAVING A FLAT CARRYING AREA**
SITZVORRICHTUNG ZUR VERWENDUNG AN EINEM FAHRZEUG MIT EINEM FLACHEN TRAGBEREICH
DISPOSITIF DE SIEGES UTILISE SUR UN VEHICULE COMPRENANT UNE ZONE DE TRANSPORT PLATE

(30) Priority: 15.07.2004 GB 0415859
(43) Date of publication of application: 28.03.2007
(73) Proprietor: Constant Developments Limited, Brentwood, Essex CM15 8AP (GB)
(72) Inventor: THOMAS, Derek, David, Swindon Wiltshire SN3 3TN (GB)
(74) Representative: Jones, Graham Henry
(86) International application number: PCT/GB2005/002810
(87) International publication number: WO 2006/005965

(56) References cited:
- WO-A-81/03001
- GB-A- 184 516
- US-A- 2 324 508
- US-A- 3 469 355

## Description

This invention relates to seating apparatus and, more especially, this invention relates to seating apparatus for use on a vehicle having a flat carrying area. This invention also relates to the vehicle when provided with the seating apparatus.

Vehicles for carrying cargo are often in the form of a truck having a driving cab and a back which forms a storage area. The back of the vehicle can be a flat back or it can be canvas-covered with drop drown sides and a tail gate. There is generally no structural protection for the storage area. If the storage area is to carry persons, for example military personnel, then it is known to install bench-type seating with specific securing means securing the bench-type seating to the back of the vehicle. Sometimes, the vehicles are for carrying personnel, for example military personnel, rather than cargo. Such vehicles may be armoured military vehicles carrying military personnel on bench-type seating. Irrespective of the type of vehicle, in the event that the vehicle is involved in an accident, the persons sitting on the bench-type seating are often thrown about and they invariably suffer injury or death.

WO 81/03001 (corresponding to the preamble of claim 1) discloses a personnel carrier vehicle having seating apparatus on a flat carrying area of the vehicle. The seating apparatus comprises a frame, side seats which face outwardly, and securing means for releasably securing the seating apparatus on the flat carrying area. The frame does not give roll over protection to persons sitting on the seats if the vehicle rolls over onto its side.

It is an aim of the present invention to obviate or reduce the above mentioned problem.

Accordingly, the present invention provides seating apparatus for use on a vehicle having a flat carrying area, which seating apparatus comprises a frame, at least two seats mounted on the frame, and securing means for releasably securing the seating apparatus on the flat carrying area of the vehicle whereby the seating apparatus is able to be secured on the flat carrying area and removed from the flat carrying area as desired, and the seating apparatus is **characterised in that** the frame is able to be dismantled when not in use, at least one of the seats is a rear facing seat, at least one of the seats is a side facing seat, the frame has frame members which extend upwardly from the flat carrying area and along a side of the vehicle, the side facing seat is positioned between the frame members and faces outwardly from the side of the vehicle, and the frame members give side roll over protection to a person in the side facing seat if the vehicle rolls over onto the side.

The ability to dismantle the frame when it is not in use is advantageous in that the frame can then easily be stored on the vehicle, with sufficient room being left on the flat carrying area for cargo also to be carried. The fact that one of the seats faces rearwardly is advantageous in that a person sitting in the rearwardly facing seat is able to have substantially unrestricted rear and side views, which can be especially desirable in some situations such for example as where troops are being transported and they require a clear arc of vision and a clear arc of fire.

The seating apparatus may be one in which there are at least two of the rear facing seats.

The seating apparatus may be one in which there are at least two of the side facing seats. By way of example, it is mentioned that there may be ten or twelve of the side facing seats.

Embodiments of the invention will now be described solely by way of example and with reference to the accompanying drawings in which:
Figure 1 is a perspective view of seating apparatus installed on a vehicle, and in use carrying a plurality of seated persons;
Figure 2 is a top plan view of the apparatus and vehicle as shown in Figure 1;
Figure 3 is a perspective view like Figure 1 but shows the seating apparatus dismantled and stored, Figure 3 showing two sets of dismantled and stored seating apparatus;
Figure 4 is a side view of the stored seating apparatus as shown in Figure 3;
Figure 5 is a top plan view of the stored seating apparatus as shown in Figure 3;
Figure 6 is a perspective view of a part of the seating apparatus;
Figure 7 is an exploded view of the part shown in Figure 6 and shows how the part is produced to be in three separate pieces;
Figure 8 illustrates how the pieces shown in Figure 7 connect together;
Figure 9 is an exploded view of a section of the seating apparatus shown in previous drawings;
Figure 10 is a perspective view of another type of seating apparatus of the present invention;
Figure 11 is a side view of the seating apparatus as shown in Figure 10;
Figure 12 is an end view of the seating apparatus as shown in Figure 10;
Figure 13 is a front view of a beam assembly as shown in Figure 10;
Figure 14 is a top view of the beam assembly as shown in Figure 13;
Figure 15 is an end view of the beam assembly as shown in Figure 13;
Figure 16 is a section on the line A - A shown in Figure 13;
Figure 17 is a perspective view of a front part of the seating apparatus as shown in Figure 10;
Figure 18 is a front view of the apparatus as shown in Figure 17;
Figure 19 is a side view of the apparatus as shown in Figure 17;
Figure 20 is a top view of the apparatus as shown in Figure 17;
Figure 21 is a perspective view of a rear part of the apparatus as shown in Figure 10;
Figure 22 is a front view of the apparatus as shown in Figure 21;
Figure 23 is a side view of the apparatus as shown in Figure 21;
Figure 24 is a top view of the apparatus as shown in Figure 21;
Figure 25 is a perspective view of a seat frame assembly forming part of the apparatus shown in Figure 10;
Figure 26 is a side view of the apparatus as shown in Figure 25;
Figure 27 is an end view of the apparatus as shown in Figure 25;
Figure 28 is a top view of the apparatus as shown in Figure 25;
Figure 29 is a perspective view of a frame part of the apparatus as shown in Figure 10;
Figure 30 is a side view of the-apparatus as shown in Figure 29;
Figure 31 is an end view of the apparatus as shown in Figure 29;
Figure 32 is a top view of the apparatus as shown in Figure 29;
Figure 33 shows a securing means for releasably securing the seating apparatus on the flat area of a vehicle;
Figure 34 shows four stages of operation of the securing means shown in Figure 33; and
Figure 35 shows how ratchet straps may be employed as alternative or additional securing means for securing the seating apparatus in position.

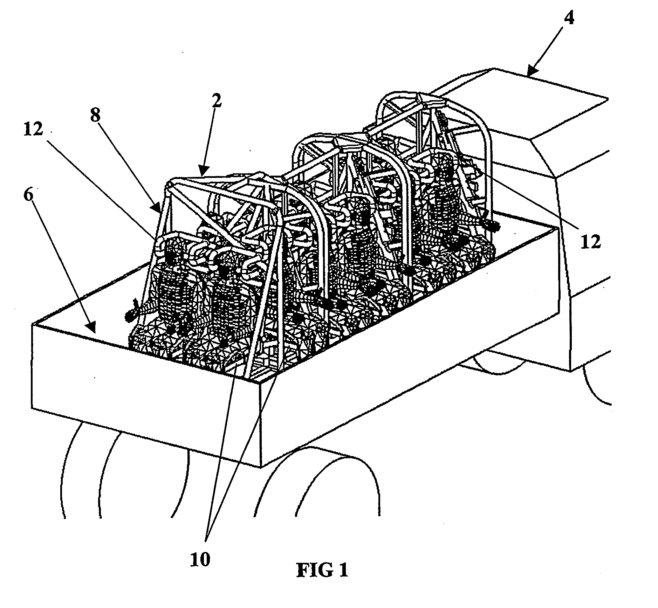

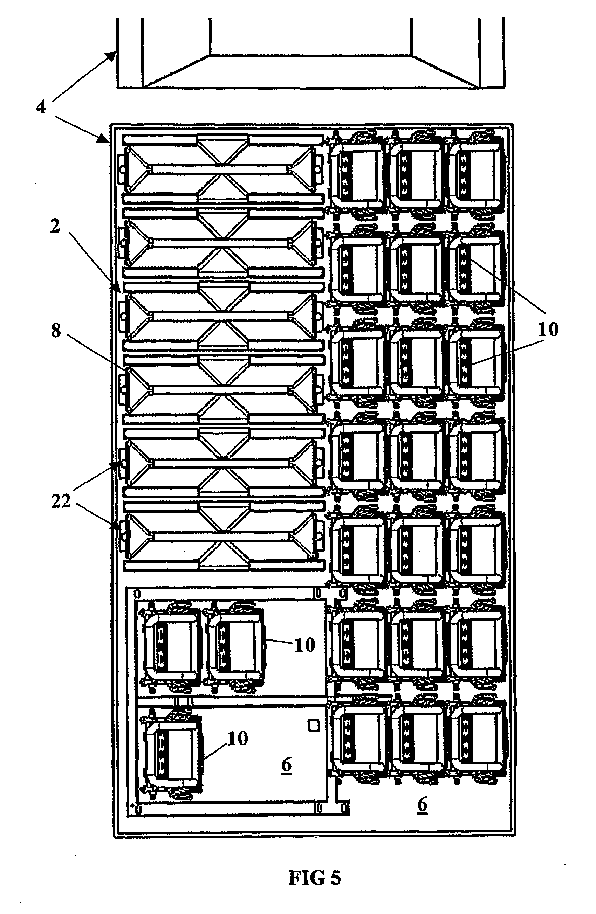

Referring to Figures 1 - 9, there is shown seating apparatus 2 for use on a vehicle 4. The vehicle 4 is in the form of a lorry and it has a flat carrying area 6. The seating apparatus 2 comprises a frame 8, seats 10 mounted on the frame 8, and securing means for releasably securing the seating apparatus 2 on the flat carrying area 6, whereby the seating apparatus 2 is able to be secured to the flat carrying area 6 and removed from the flat carrying area 6 as desired. This enables the seating apparatus 2 easily to be stored on the flat carrying area 6 for transportation purposes as and when appropriate. More specifically, the seating apparatus 2 is such that the frame 8 is able to be dismantled when not in use. As shown in the drawings, at least one of the seats 10 is a rear facing seat, and at least one of the seats 10 is a side facing seat. More specifically, there are two of the rear facing seats 10 and there are ten of the side facing seats 10, with the side facing seats being such that there are two rows of five seats 10 facing along opposite sides of the seating apparatus 2.

The frame 8 is such that it gives roll over protection to persons 12 seated on the seating apparatus 2 in the event that the vehicle 4 should roll over.

As shown in Figure 1, there are two persons 12 sitting on the two rearwardly facing seats 10. These persons have an unrestricted view, which is desirable if the persons 12 are troops requiring a clear arc of fire.

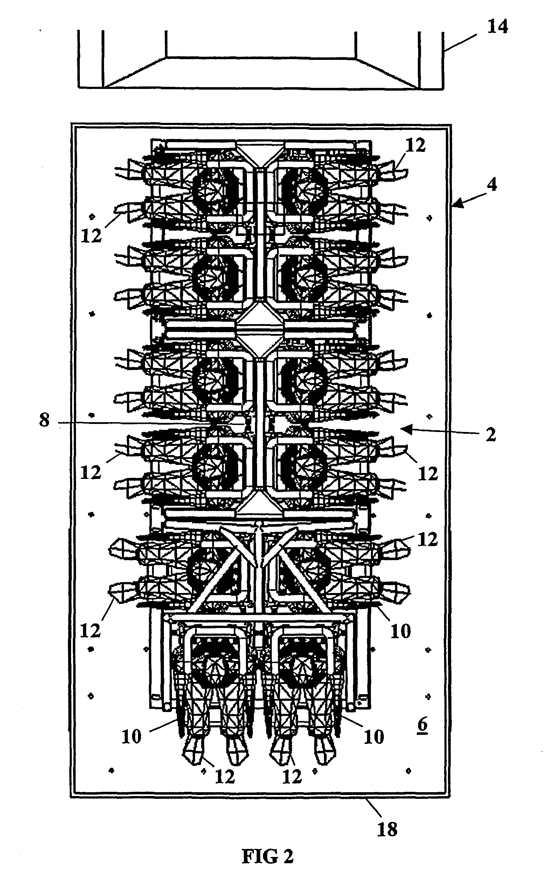

Figure 2 illustrates how the seating apparatus 2 nearer the front 14 of the vehicle 4 is in the form of standard modules 16, and how the seating apparatus at the rear 18 of the vehicle 4 is in the form of a hybrid module 20.

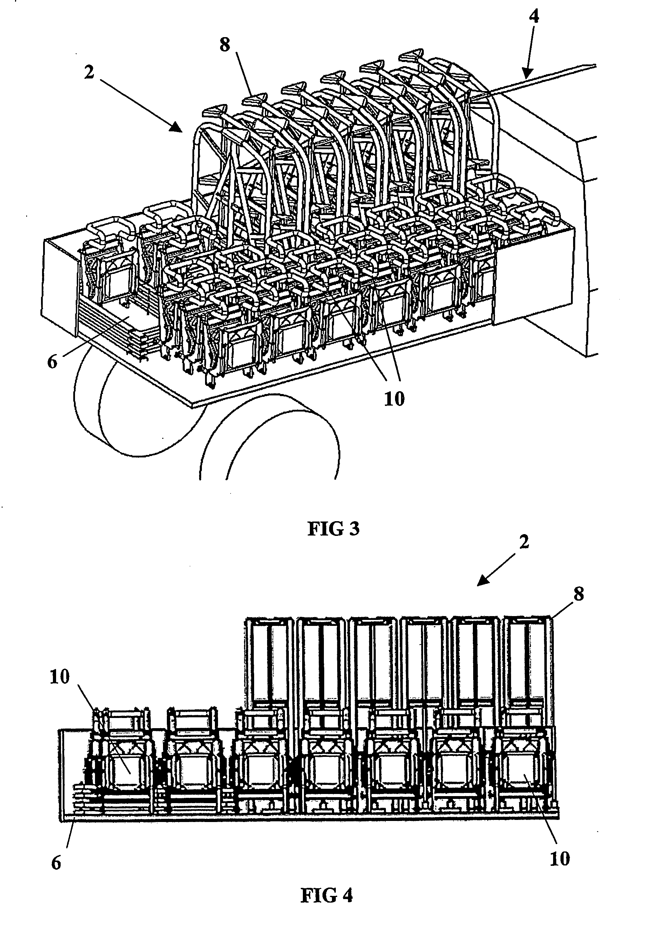

Figures 3, 4 and 5 shown two sets of dismantled seating apparatus 2 being carried on one single vehicle 4. As shown in Figures 3, 4 and 5 the seating apparatus 2 comprises sectional three-piece frame parts 22 giving roll over protection, and it also comprises sub-frame parts 24.

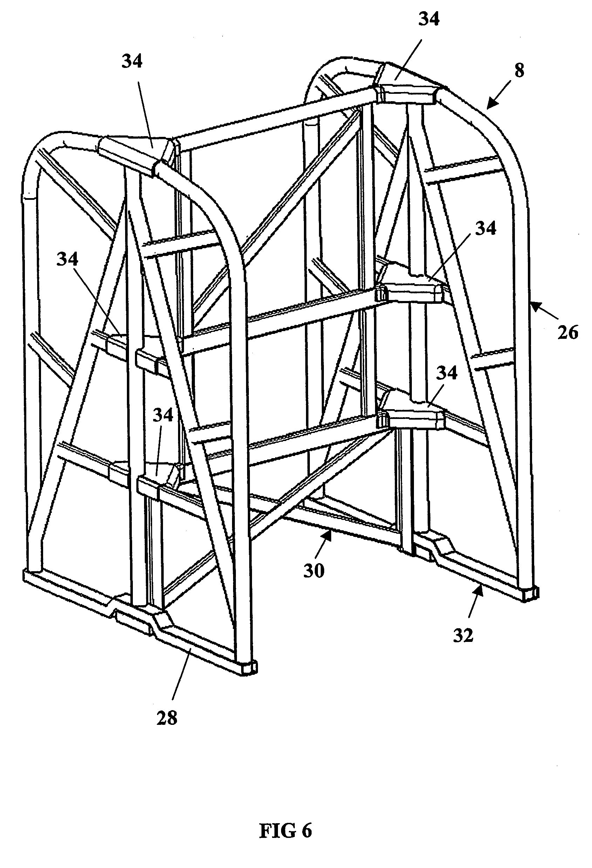

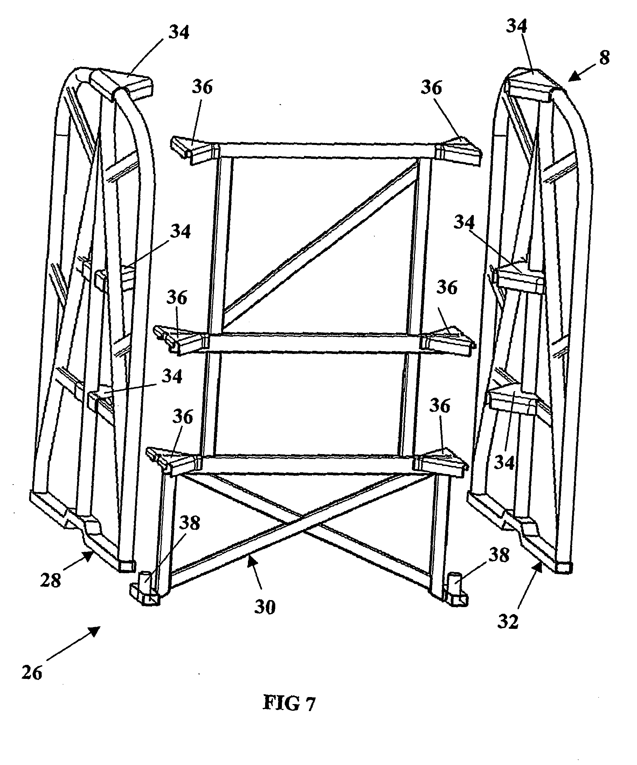

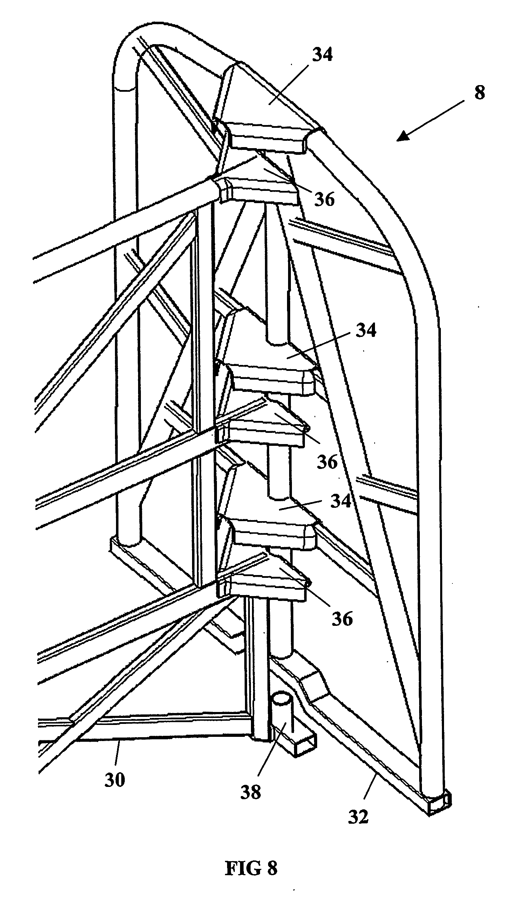

As can be appreciated from Figures 6 - 9, the seating apparatus 2 is such that the frame 8 is in sections 26. The sections 26 may be the parts 22 and they are formed of three parts 28, 30, 32 as shown. The sections 26 give roll over protection. Connection of the parts 28, 30, 32 is best appreciated from Figure 8. As shown in Figure 8, triangular members 24, 36 fit on top of one another. Upstanding members 38 in the central part 30 may locate in apertures in the side parts 28, 32 as can best be appreciated from Figures 7 and 8.

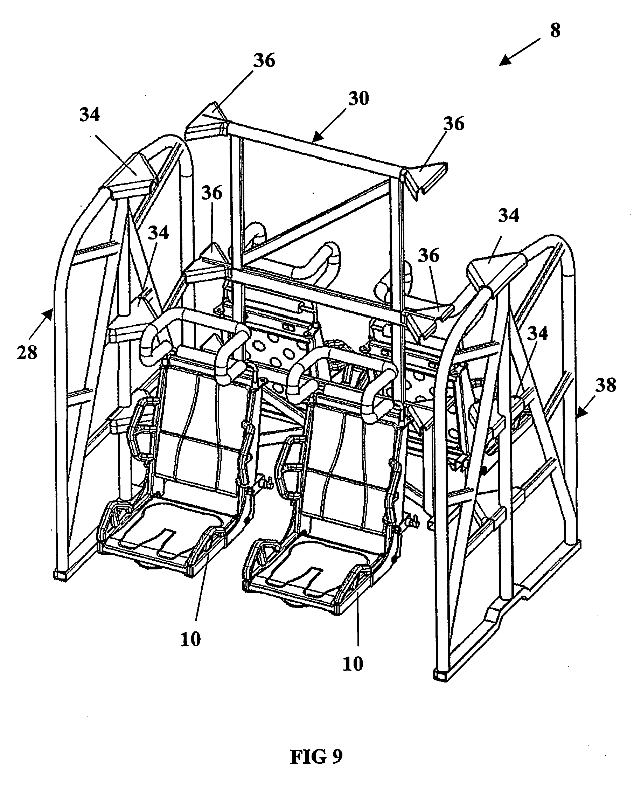

Figure 9 illustrates how the seats 10 hang from the frame 8. The seats 10 do not have any parts which reach the floor, i.e. the flat carrying area 6 of the vehicle 4. Thus there is storage space underneath the seats 10 when the seating apparatus 2 is in use and persons 12 are sitting on the seats 10.

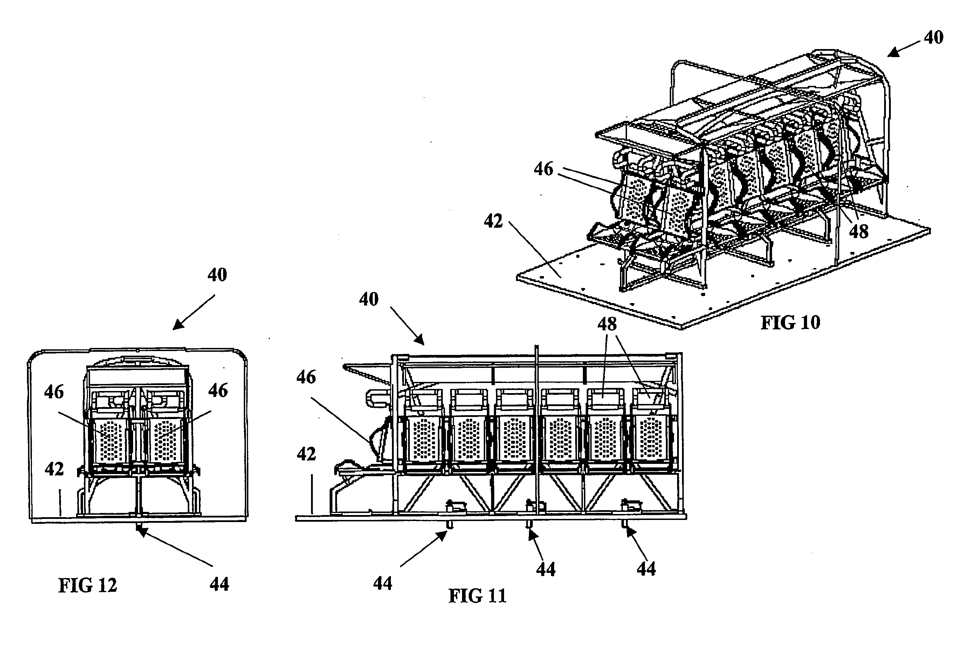

Referring now to Figures 10 - 30, there is shown seating apparatus 40 for use on a vehicle (not shown) having a flat carrying area 42. The flat carrying area 42 can be an actual part of the vehicle 4, or it can be a subpart in the form of a plate for attachment to the flat back of a vehicle 4.
Figures 11, 30 and 31 show securing means 44 for securing the seating apparatus 40 in position. The illustrated securing means 44 can be in the form of an expansion bolt system. Alternatively, the securing means may be clamp system or any suitable and appropriate releasable securing means. The securing means 4 is advantageously such that it is quickly and easily secured in position, whilst also being quickly and easily releasable for dismantling purposes. The securing means employed in the seating apparatus of the present invention is such that it is able to maintain the seating apparatus in position on the vehicle 2 in a safe manner, even when the seating apparatus is fully occupied by persons and the vehicle 4 may be swaying from side to side. Thus persons 12 sitting on the seating apparatus are safety seated and they are also provided with roll over protection afforded by the illustrated roll over frame parts shown in the drawings.

As can be seen from Figures 10, 11 and 12, the seating apparatus 40 is such that there are two rearwardly facing seats 46 and six side facing seats 48 extending along either side of the seating apparatus 40.

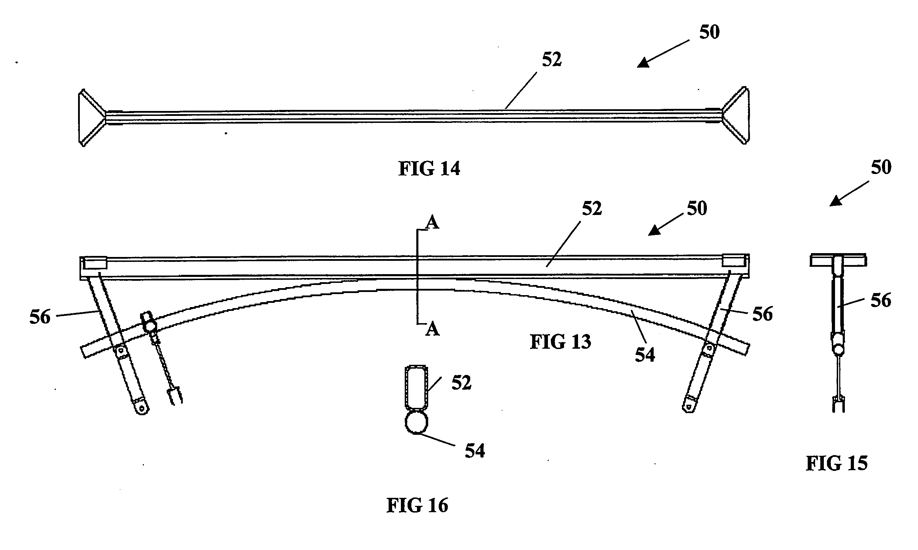

Figures 13 - 16 show the construction of a beam assembly 50. The beam assembly 50 comprises a straight member 52 and a curved member 54. Stays 56 are provided at the ends of the members 52, 54 as best shown in Figures 13 and 15.

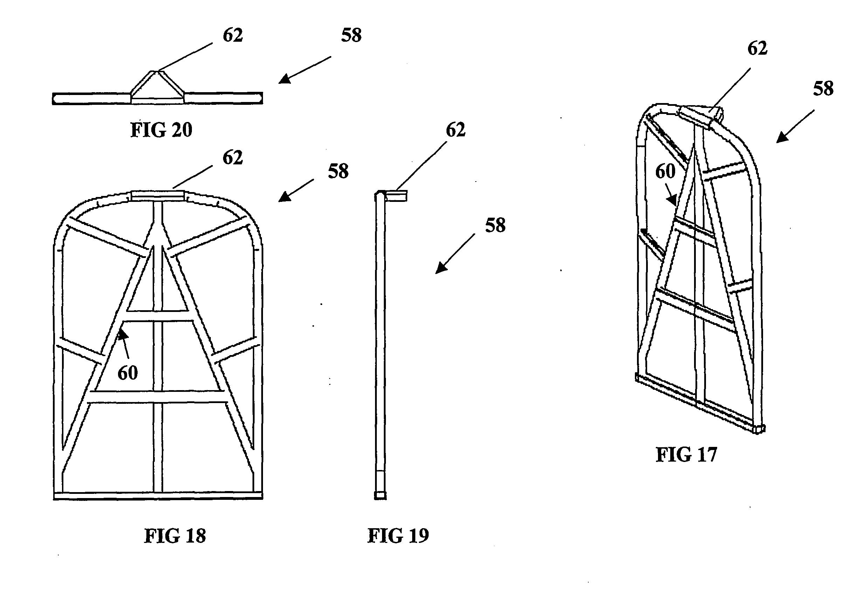

Referring to Figures 17 - 20, there is shown a front part 58 of the seating apparatus 40. As shown, the front part 58 has an open frame work 60 which gives strength and rigidity. A connecting member 62 is provided for facilitating connection of the front part 58 to other parts of the seating apparatus 40.

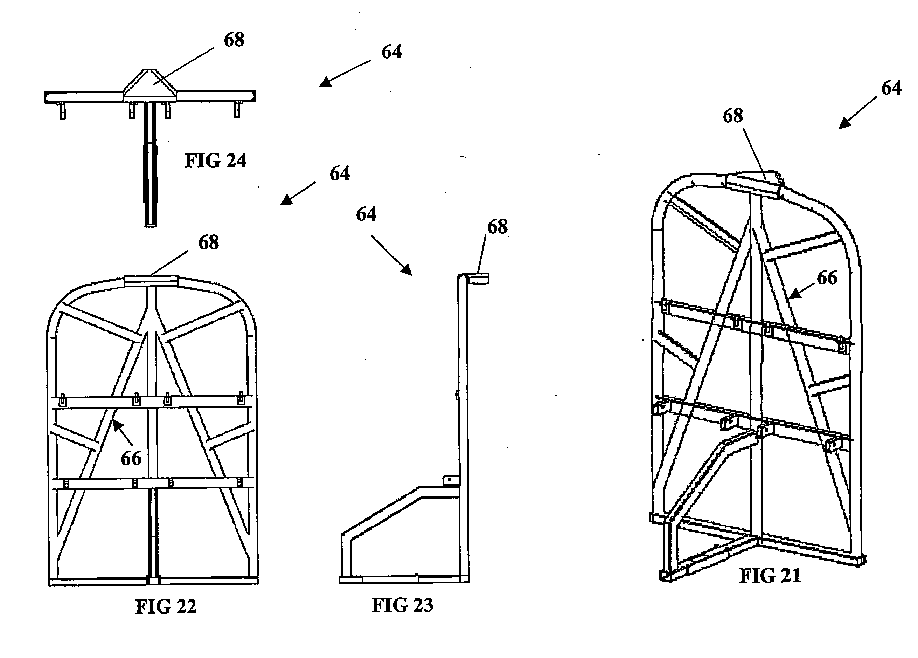

Figures 21 - 24 show a rear part 64 of the seating apparatus 40. The rear part 64 has an open frame work 66 giving strength and rigidity. A connecting member 68 is shown for use in connecting the rear part 64 to the remainder of the seating apparatus 40.

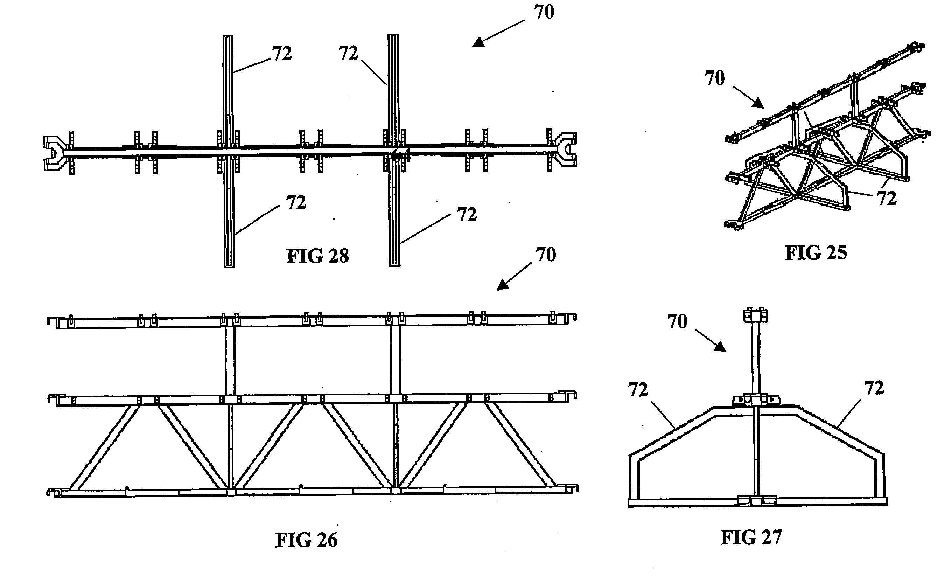

Figures 25 - 28 show a main seat frame part 70 of the seating apparatus 40. The seat frame part 70 has side members 72 as shown for use in receiving other parts of the seating apparatus 40.

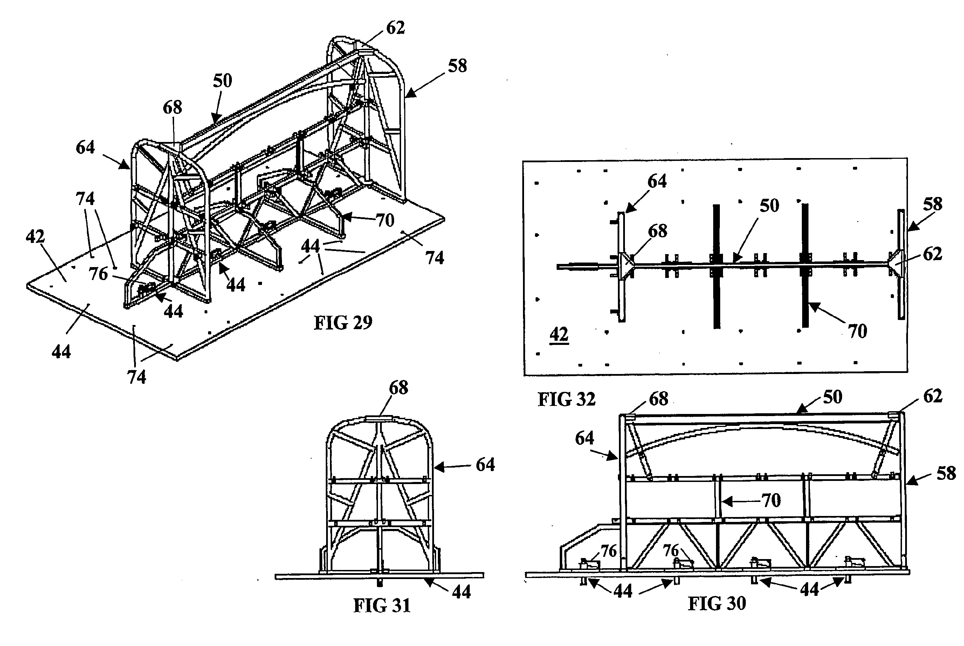

Figures 29 - 32 show the apparatus shown in Figures 14 - 28 in assembled form. Figure 29 best shows the assembled beam assembly 50, the front part 58, the rear part 64 and the seat frame part 70. Location apertures 74 and/or securing means 44 are shown schematically. Figure 29 also shows the securing means 44 and how the securing means 44 may have a lever 76.

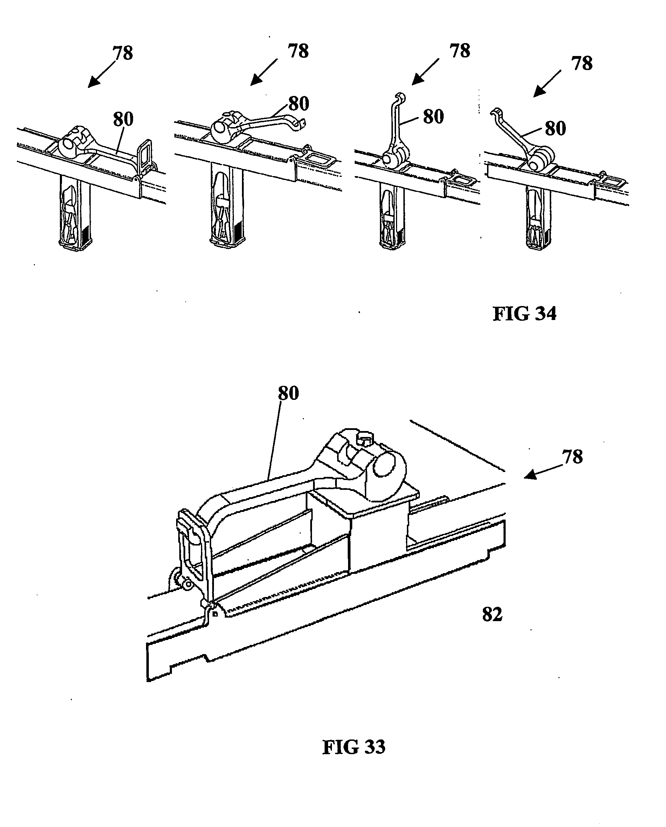

Referring to Figures 33 and 34, there is shown securing means 78.
The securing means 78 has a lever 80. Figure 34 shows three stages of operation of the lever 80. A spacer collar 82 may be employed. As can best be seen from Figure 34, the securing means 78 has a latching arrangement comprising an expansion device which is expanded and contracted by virtue of movement of the lever 80, and which fits in an appropriate socket on the vehicle.

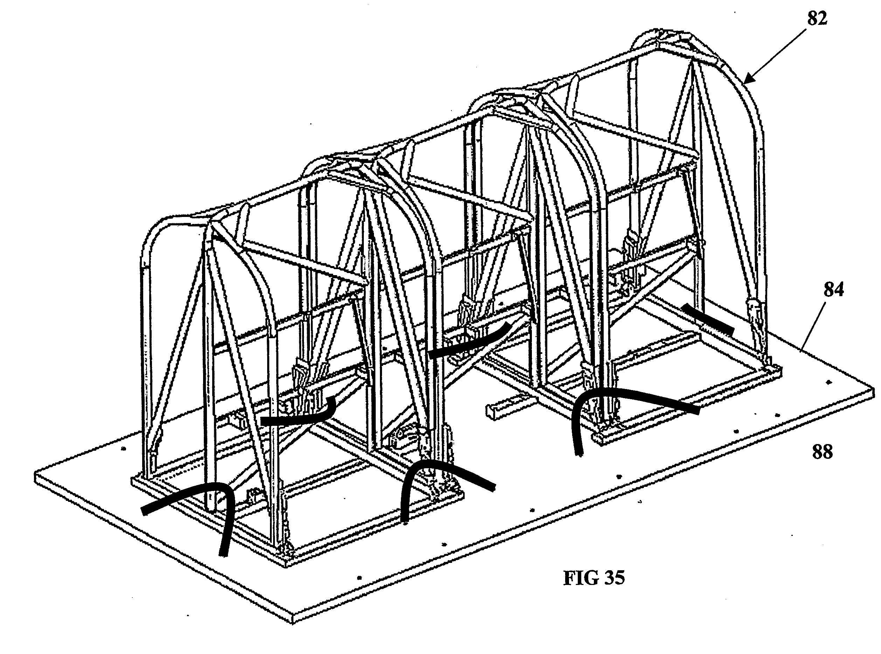

Referring now to Figure 35, there is shown part of seating apparatus 82 mounted on a flat carrying area 84, and secured in position by securing means in the form of six ratchet straps 88. The ratchet straps 88 may be used on their own or with one or more of the securing means 78.

## Claims

1. Seating apparatus (2) for use on a vehicle (4) having a flat carrying area (6), which seating apparatus (2) comprises a frame (8), at least two seats (10) mounted on the frame (8), and securing means (44) for releasably securing the seating apparatus (2) on the flat carrying area (6) of the vehicle (4) whereby the seating apparatus (2) is able to be secured on the flat carrying area (6) and removed from the flat carrying area (6) as desired, and the seating apparatus (2) is **characterised in that** the frame (8) is able to be dismantled when not in use, at least one of the seats (10) is a rear facing seat (10), at least one of the seats (10) is a side facing seat (10), the frame (8) has frame members which extend upwardly from the flat carrying area (6) and along a side of the vehicle (4), the side facing seat (10) is positioned between the frame members and faces outwardly from the side of the vehicle (4), and the frame members give side roll over protection to a person (12) in the side facing seat (10) if the vehicle (4) rolls over onto the side.

2. Seating apparatus (2) according to claim 1 in which there are at least two of the rear facing seats (10).

3. Seating apparatus (2) according to claim 1 or claim 2 and in which there are at least two of the side facing seats (10).

4. Seating apparatus (2) according to claim 3 in which there are ten or twelve of the side facing seats (10).

## Patentansprüche

1. Sitzvorrichtung (2) zur Verwendung an einem Fahrzeug (4) mit einem flachen Tragebereich (6), wobei die Sitzvorrichtung (2) einen Rahmen (8), mindestens zwei am Rahmen (8) montierte Sitze (10) und ein Befestigungsmittel (44) zur lösbaren Befestigung der Sitzvorrichtung (2) auf dem flachen Tragebereich (6) des Fahrzeugs (4) umfasst, wodurch die Sitzvorrichtung (2) nach Wunsch auf dem flachen Tragebereich (6) befestigt und vom flachen Tragebereich (6) entfernt werden kann, und wobei die Sitzvorrichtung (2) **dadurch gekennzeichnet ist, dass** der Rahmen (8) auseinandergebaut werden kann, wenn er nicht in Gebrauch ist, mindestens einer der Sitze (10) ein nach hinten gerichteter Sitz (10) ist, mindestens einer der Sitze (10) ein zur Seite gerichteter Sitz (10) ist, der Rahmen (8) Rahmenelemente hat, die sich vom flachen Tragebereich (6) nach oben und entlang einer Seite des Fahrzeugs (4) erstrecken, der zur Seite gerichtete Sitz (10) zwischen den Rahmenelementen positioniert ist und von der Seite des Fahrzeugs (4) nach außen gerichtet ist und die Rahmenelemente einer Person (12) auf dem zur Seite gerichteten Sitz (10) Seitenüberrollschutz gewähren, wenn sich das Fahrzeug (4) seitlich überschlägt.

2. Sitzvorrichtung (2) nach Anspruch 1, wobei von den nach hinten gerichteten Sitzen (10) mindestens zwei vorliegen.

3. Sitzvorrichtung (2) nach Anspruch 1 oder 2, wobei von den zur Seite gerichteten Sitzen (10) mindestens zwei vorliegen.

4. Sitzvorrichtung (2) nach Anspruch 3, wobei von den zur Seite gerichteten Sitzen (10) zehn oder zwölf vorliegen.

## Revendications

1. Dispositif de siège (2) destiné à être utilisé sur un véhicule (4) ayant une surface de transport plate (6), lequel dispositif de siège (2) comprend un cadre (8), au moins deux sièges (10) montés sur le cadre (8), et des moyens de fixation (44) pour fixer de manière détachable le dispositif de siège (2) sur la surface de transport plate (6) du véhicule (4), le dispositif de siège (2) étant ainsi capable d'être fixé sur la surface de transport plate (6) et d'être enlevé de la surface de transport plate (6) selon les besoins, et le dispositif de siège (2) étant **caractérisé en ce que** le cadre (8) peut être démonté lorsqu'il n'est pas utilisé, au moins l'un des sièges (10) est un siège tourné vers l'arrière (10), au moins l'un des sièges (10) est un siège tourné vers le côté (10), le cadre (8) a des organes de cadre qui s'étendent vers le haut depuis la surface de transport plate (6) et le long d'un côté du véhicule (4), le siège tourné vers le côté (10) est positionné entre les organes de cadre et est tourné vers l'extérieur depuis le côté du véhicule (4), et les organes de cadre offrent une protection latérale contre les tonneaux pour une personne (12) dans le siège tourné vers le côté (10) si le véhicule (4) se retourne sur le côté.

2. Dispositif de siège (2) selon la revendication 1, dans lequel il y a au moins deux sièges tournés vers l'arrière (10).

3. Dispositif de siège (2) selon la revendication 1 ou 2, et dans lequel il y a au moins deux sièges tournés vers le côté (10).

4. Dispositif de siège (2) selon la revendication 3, dans lequel il y a dix ou douze sièges tournés vers le côté (10).
